# EUROPEAN PATENT SPECIFICATION

(11) **EP 4 211 914 B1**
(45) Date of publication and mention of the grant of the patent: **20.05.2026**
(21) Application number: 21880478.9
(22) Date of filing: 12.10.2021
(51) Int. Cl.: H04W 12/08

(54) **METHOD AND APPARATUS FOR ESTABLISHING SECURE CONNECTIONS FOR EDGE COMPUTING SERVICES**
VERFAHREN UND VORRICHTUNG ZUR HERSTELLUNG SICHERER VERBINDUNGEN FÜR EDGE-COMPUTING-DIENSTE
PROCÉDÉ ET APPAREIL DESTINÉS À ÉTABLIR DES CONNEXIONS SÉCURISÉES POUR DES SERVICES INFORMATIQUES EN PÉRIPHÉRIE

(30) Priority: 12.10.2020 IN 202041044423; 04.10.2021 IN 202041044423
(43) Date of publication of application: 19.07.2023
(73) Proprietor: Samsung Electronics Co., Ltd., Suwon-si, Gyeonggi-do 16677 (KR)
(72) Inventor: RAJADURAI, Rajavelsamy, Suwon-si, Gyeonggi-do, 16677 (KR); GUPTA, Nishant, Suwon-si, Gyeonggi-do, 16677 (KR); RAJENDRAN, Rohini, Suwon-si, Gyeonggi-do, 16677 (KR); SASI, Nivedya Parambath, Suwon-si, Gyeonggi-do, 16677 (KR)
(74) Representative: Gulde & Partner
(86) International application number: PCT/KR2021/014044
(87) International publication number: WO 2022/080831

(56) References cited:
- US-A1- 2019 223 063
- "3rd Generation Partnership Project; Technical Specification Group Services and System Aspects; Study on Security Aspects of Enhancement of Support for Edge Computing in 5GC (Release 17)", 29 August 2020 (2020-08-29), XP052468796, Retrieved from the Internet <URL:https://ftp.3gpp.org/tsg_sa/WG3_Security/TSGS3_100e/Docs/S3-202085.zip S3-202085- TR 33.839_v010-cl.docx> [retrieved on 20200829]
- "3rd Generation Partnership Project; Technical Specification Group Services and System Aspects; Study on authentication and key management for applications based on 3GPP credential in 5G (Release 16)", vol. SA WG3, no. V1.2.0, 2 January 2020 (2020-01-02), pages 1 - 80, XP051841103, Retrieved from the Internet <URL:ftp://ftp.3gpp.org/Specs/archive/33_series/33.835/33835-120.zip 33835-120.docx> [retrieved on 20200102]
- LENOVO, MOTOROLA MOBILITY: "Authentication and Authorization with the Edge Data Network", 3GPP DRAFT; S3-202605, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20201012 - 20201016, 2 October 2020 (2020-10-02), Mobile Competence Centre ; 650, route des Lucioles ; F-06921 Sophia-Antipolis Cedex ; France , XP051937906
- ANONYMOUS: "3 Generation Partnership Project; Technical Specification Group Services and System Aspects; Study on application architecture for enabling Edge Applications; (Release 17)", 3GPP STANDARD; TECHNICAL REPORT; 3GPP TR 23.758, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. V17.0.0, 19 December 2019 (2019-12-19), Mobile Competence Centre ; 650, route des Lucioles ; F-06921 Sophia-Antipolis Cedex ; France , pages 1 - 113, XP051840754
- "3rd Generation Partnership Project; Technical Specification Group Services and System Aspects; Study on Security Aspects of Enhancement of Support for Edge Computing in 5GC (Release 17)", 3GPP STANDARD; TECHNICAL REPORT; 3GPP TR 33.839, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 14 September 2020 (2020-09-14), Mobile Competence Centre ; 650, route des Lucioles ; F-06921 Sophia-Antipolis Cedex ; France , pages 1 - 24, XP051960851
- INTEL: "Updates to Solution 3", 3GPP DRAFT; S3-202521, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20201012 - 20201016, 2 October 2020 (2020-10-02), Mobile Competence Centre ; 650, route des Lucioles ; F-06921 Sophia-Antipolis Cedex ; France , XP051937822
- INTEL, HUAWEI, HISILICON, SAMSUNG: "Key Issue: Security Requirements for EDGE-4 Interface", 3GPP DRAFT; S3-202116, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20200817 - 20200828, 23 August 2020 (2020-08-23), Mobile Competence Centre ; 650, route des Lucioles ; F-06921 Sophia-Antipolis Cedex ; France , XP051921334

## Description

### [Technical Field]

The disclosure relates to wireless communication. More particularly, the disclosure relates to method and device for establishing secure connection for edge computing services.

### [Background Art]

To meet the demand for wireless data traffic having increased since deployment of 4th generation (4G) communication systems, efforts have been made to develop an improved 5th generation (5G) or pre-5G communication system. The 5G or pre-5G communication system is also called a 'beyond 4G network' or a 'post long term evolution (LTE) system'. The 5G communication system is considered to be implemented in higher frequency (mmWave) bands, e.g., 60 giga-Hertz (GHz) bands, so as to accomplish higher data rates. To decrease propagation loss of the radio waves and increase the transmission distance, beamforming, massive multiple-input multiple-output (MIMO). full dimensional MIMO (FD-MIMO), array antenna, analog beamforming, and large scale antenna techniques are discussed with respect to 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid frequency shift keying (FSK) and Feher's quadrature amplitude modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as technologies connectivity network where humans generate and consume information, is now evolving to the Internet of things (IoT) where the cloud server has IoT implementation, a sensor network, a machine-to-machine (M2M) communication, machine type communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, MTC, and M2M communication may be implemented by beamforming, MIMO, and array antennas. Application of a cloud RAN as the above-described big data processing technology may also be considered to be as an example of convergence between the 5G technology and the IoT technology.

A prior art concerning Edge authorization in wireless services is "3rd Generation Partnership Project; Technical Specification Group Services and System Aspects; Study on Security Aspects of Enhancement of Support for Edge Computing in 5GC (Release 17)", 3GPP DRAFT; S3-202085, 29 August 2020.

The above information is presented as background information only to assist with an understanding of the disclosure.

### [Disclosure]

### [Technical Solution]

The claimed embodiments herein provide a system and method for establishing secure connections for the edge computing (EC) services. The method and system disclose introducing an entity in the serving network to handle security aspects for enabling the EC service. The proposed method and devices disclose pre-configuring a security mechanism to be used for authentication of a UE and interface security with the EEC based on an EC service deployment.

### [Description of Drawings]

The above and other aspects, features, and advantages of certain embodiments of the disclosure will be more apparent from the following description taken in conjunction with the accompanying drawings, in which:
FIG. 1 is a block diagram of the edge computing system according to the related art;
FIG. 2 is a sequence diagram, illustrating a key hierarchy, according dependency on the home network, according to the related art;
FIG. 3 is a block diagram illustrating a UE in communication with the EDN, the ECS over a 3GPP core network in a wireless network for establishing secure connections in the edge computing services, according to an embodiment of the disclosure;
FIG. 4 is a schematic diagram, illustrating the new entity EIWF being introduced in the 3GPP core network for establishment of secure channel for the Edge Computing Service, according to an embodiment of the disclosure;
FIG. 5 is a schematic diagram, illustrating key hierarchy and association with different entities in the wireless network for establishing secure channel for the Edge Computing Services, according to an embodiment of the disclosure;
FIG. 6 is a schematic diagram, illustrating a key hierarchy for Edge Computing Services, according to an embodiment of the disclosure;
FIG. 7 is a schematic diagram illustrating a Key hierarchy for establishing the secure connection for the Edge Computing Services, according to an embodiment of the disclosure;
FIG. 8 is a schematic diagram, illustrating a structure of a GUTI for identifying a UE context in the AMF according to an embodiment of the disclosure;
FIG. 9 is a sequence diagram, illustrating a method of establishing secure connection for the Edge Computing Services, according to an embodiment of the disclosure;
FIG. 10 is a sequence diagram. illustrating a method of establishing secure connection for the Edge Computing Services, according to a claimed embodiment of the disclosure;
FIG. 11 is a sequence diagram. illustrating a method of establishing secure connection for the Edge Computing Services, according to an embodiment of the disclosure;
FIG. 12 is a flow diagram, illustrating a method of establishing secure connection for the Edge Computing Services, according to an embodiment of the disclosure;
FIG. 13 illustrates a server according to an embodiment of the disclosure; and
FIG. 14 illustrates a user equipment (UE) according to an embodiment of the disclosure.

Throughout the drawings, it should be noted that like reference numbers are used to depict the same or similar elements, features, and structures.

### [Best Mode]

Aspects of the disclosure are to address at least the above-mentioned problems and/or disadvantages and to provide at least the advantages described below. Accordingly, an aspect of the disclosure is to provide a method of establishing secure connection for edge computing services in a wireless network, the method comprising performing, by the UE, a primary network access authentication with a first network entity in the wireless network, detecting, by the UE, a trigger for configuring edge computing services in response to a successful primary network access authentication with the first network entity, sending, by the UE, an initial security context establishment request including a plurality of security context related parameters to an Edge Configuration Server (ECS), receiving, by the UE, an initial security context establishment status from the ECS indicating a successful initial security context establishment, and establishing, by the UE, a secure connection with the Edge Configuration Server in response to determining that the initial security context establishment response as successful.

In the embodiment, the first network entity is an Access and Mobility Management Function (AMF).

Additional aspects will be set forth in part in the description which follows and, in part, will be apparent from the description, or may be learned by practice of the presented embodiments.

In the embodiment, sending, by the UE, the initial security context establishment request to the Edge Configuration Server comprises deriving, by the UE , keys for the Edge computing service using a Non Access Stratum security context established as part of the primary network access authentication, upon detecting the trigger to configure the edge computing service, and sending, by the UE, the initial security context establishment request comprising the plurality of security context parameters to identify the first network entity holding a context of the UE by the second network entity.

In accordance with an aspect of the disclosure, a method is provided. The method includes receiving, by the Edge Configuration Server, the initial security context establishment request, initiating, by the Edge Configuration Server, a authentication key request to the second network entity using the security context related parameters, receiving, by the Edge Configuration Server, the authentication key from the second network entity in response to the authentication key request, establishing, by the Edge Configuration Server, the authentication key, wherein the authentication key is KECS, indicating, by the Edge Configuration Server, a security context establishment status to the UE.

In the embodiment, receiving, by the Edge Configuration Server, the authentication key from the second network entity in response to the authentication key request comprises receiving, by the second network entity, the authentication key request, wherein the second network entity is an Edge Inter Working Function (EIWF), performing by the Edge Inter Working Function one of sending the KECS key to the Edge Configuration Server in response to determining that the EIWF does have a valid KECS, and sending the authentication key request to the first entity which holds the NAS security context of the UE, receiving the edge key KEDGE from the first network entity, deriving the KECS key from the edge key KEDGE, and sending the KECS key to the Edge Configuration Server in response to determining that the EIWF does not have a valid KECS.

In accordance with another aspect of the disclosure, a method is provided. The method includes initiating, by the UE, a service provisioning procedure with the Edge Configuration Server over the established secure connection, sending, by the UE, an initial security context establishment request to an Edge Enabler Server, sending, by the Edge Enabler Server, a key request to the Edge Configuration Server in response to the initial security context establishment request, deriving, by the Edge Configuration Server, a Key for Edge Enabler Server based on a key KECS, sending, by the Edge Configuration Server, the key for Edge Enabler Server to the Edge Enabler Server, sending, by the Edge Enabler Server, an initial security context establishment status to the UE based on successful establishment of the Key for Edge Enabler Server, and establishing, by the UE, a secure connection with the Edge Enabler Server in response to determining that the initial security context establishment response as successful, wherein the Edge Enabler Server initiates the secure channel establishment procedure using the dynamically generated PSK for Edge Enabler Server for authentication of the secure channel establishment procedure, wherein the secure channel establishment procedure is one a TLS-PSK procedure and a IKEv2 procedure using PSK-based authentication.

In accordance with another aspect of the disclosure, a method is provided. The method includes initiating, by the UE, one of the Edge Configuration Server registration procedure and the discovery procedure with the Edge Enabler Server, over the established secure connection, deriving, by the Edge Enabler Server, a key for an Edge Application Server based on the key for Edge Enabler Server, sending, by the Edge Enabler Server, the key for Edge Application Server to the Edge Application Server, obtaining, by the UE, a service from Edge Application Server, by obtaining key for Edge Application Server from the Edge Enabler Server, and obtaining, by the UE, security policy from the Edge Enabler Server.

In accordance with another aspect of the disclosure, a wireless system for establishing secure connection for edge computing services is provided. The wireless system includes a User Equipment (UE), an Edge Application Server, an Edge Enabler Server, and an Edge Configuration Server (ECS), wherein the UE is configured to perform a primary network access authentication with a first network entity in the wireless network, detect a trigger for configuring edge computing services in response to a successful primary network access authentication with the first network entity, send an initial security context establishment request including a plurality of security context related parameters to an Edge Configuration Server (ECS), receive an initial security context establishment status from the Edge Configuring Server indicating a successful initial security context establishment, and establish a secure connection with the Edge Configuration Server in response to determining that the initial security context establishment response as successful.

In the embodiment, the first network entity is an Access and Mobility Management Function (AMF).

In the embodiment, sending, the initial security context establishment request to the Edge Configuration Server comprises deriving, by the UE, keys for the edge computing service using a Non Access Stratum security context established as part of the primary network access authentication with the first network entity, upon detecting the trigger to configure the edge computing service, and sending, by the UE, the initial security context establishment request comprising the plurality of security context parameters to identify the first network entity holding a context of the UE by the second network entity.

In the embodiment, the Edge Configuration Server is configured to receive the initial security context establishment request, initiate an authentication key request to the second network entity using the security context related parameters, receive the authentication key from the second network entity in response to the authentication key request, establish the authentication key, wherein the authentication key is KECS, indicate a security context establishment status to the UE.

In the embodiment, receiving, the authentication key from the second network entity in response to the authentication key request comprises receiving, by the second network entity, the authentication key request, wherein the second network entity is an Edge Inter Working Function (EIWF), performing by the Edge Inter Working Function one of sending the KECS key to the Edge Configuration Server in response to determining that the EIWF does have a valid KECS, and sending the authentication key request to the first entity which holds the NAS security context of the UE, receiving the edge key KEDGE from the first network entity, deriving the KECS key from the edge key KEDGE, and sending the KECS key to the Edge Configuration Server in response to determining that the EIWF does not have a valid KECS.

In the embodiment, the UE is further configured to initiating, by the UE, a service provisioning procedure with the Edge Configuration Server over the established secure connection, sending, by the UE, an initial security context establishment request to an Edge Enabler Server, wherein the Edge Enabler Server is configured to send a key request to the Edge Configuration Server in response to the initial security context establishment request, derive a Key for Edge Enabler Server based on a key KECS, send the key for Edge Enabler Server to the Edge Enabler Server, send an initial security context establishment status to the UE based on successful establishment of the Key for Edge Enabler Server, and wherein the UE is further configured to establish a secure connection with the Edge Enabler Server in response to determining that the initial security context establishment response as successful, wherein the Edge Enabler Server initiates the secure channel establishment procedure using the dynamically generated PSK for Edge Enabler Server for authentication of the secure channel establishment procedure, wherein the secure channel establishment procedure is one a TLS-PSK procedure and a IKEv2 procedure using PSK-based authentication.

In the embodiment, the UE is configured to initiate one of the Edge Configuration Server registration procedure and the discovery procedure with the Edge Enabler Server, over the established secure connection, wherein the Edge Enabler Server is configured to derive a key for an Edge Application Server based on the key for Edge Enabler Server, send the key for Edge Application Server to the Edge Application Server, obtain a service from Edge Application Server, by obtaining key for Edge Application Server from the Edge Enabler Server, and wherein the UE is further configured to obtain a security policy from the Edge Enabler Server.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein.

Other aspects, advantages, and salient features of the disclosure will become apparent to those skilled in the art from the following detailed description, which, taken in conjunction with the annexed drawings, discloses various embodiments of the disclosure.

### [Mode for Invention]

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

As is traditional in the field, embodiments may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

The accompanying drawings are used to help easily understand various technical features and it should be understood that the embodiments presented herein are not limited by the accompanying drawings. As such, the disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally only used to distinguish one element from another.

Accordingly the embodiments herein provide a system and method for establishing secure connections for the edge computing (EC) services. The method and system disclose introducing an entity in the serving network to handle security aspects for enabling the EC service. The proposed method and devices disclose pre-configuring a security mechanism to be used for authentication of a UE and interface security with the EEC based on an EC service deployment.

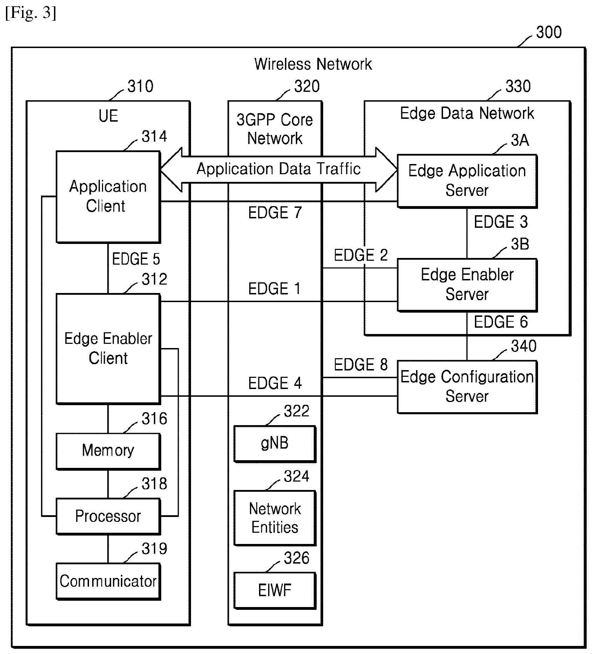

Referring now to the drawings, and more particularly to FIGS. 3 to 12 where similar reference characters denote corresponding features consistently throughout the figures, there are shown preferred embodiments.

Edge computing is a network architecture concept which enables cloud computing capabilities and service environments, which are deployed close to a user device. The edge computing services provides several benefits such as lower latency, higher bandwidth, reduced backhaul traffic and prospects for new services compared to existing cloud environments.

With the advent of the edge computing capabilities, the applications on a User Equipment (UE) can be more responsive and provide features, which were not possible without the low latency and fast processing capabilities provided by the Edge computing systems. The applications such as virtual reality (VR) gaming and network assisted processing rely heavily on the edge computing capabilities. Certain features of the applications may be provided without the use of edge computing systems, while certain features are not serviceable without the edge computing capabilities.

Edge computing systems provided by a service provider, such as a Mobile Network Operator, may not be ubiquitous in near future due to operational and financial constraints. An application, to leverage the capabilities and features provided by the Edge computing system, needs to be aware of the edge computing systems/features at its disposal, such as, to enable or disable features, which rely on use of the edge computing. In addition, availability of the edge computing systems can change dynamically due to multiple reasons. Such changes should be notified to the applications in the UE to fine-tune the provided services accordingly. For instance, the availability of the edge applications may be dependent on a location of the user/UE, and the content that is available at the edge.

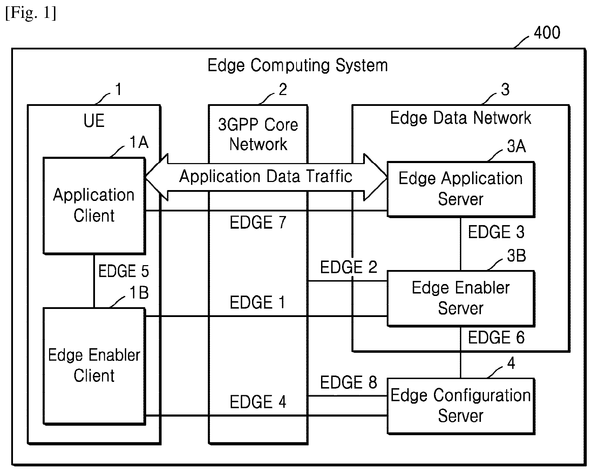

FIG. 1 is a block diagram of an edge computing system according to the related art.

Referring to FIG. 1, a UE (1) of edge computing system (400) is communicating with an edge data network (3) and an Edge Configuration Server (ECS) (4) over a 3rd Generation Partnership Program (3GGPP) core network (2).

The edge data network (3) is a local data network comprising an Edge Application Server(s) (EAS) (3A) and an Edge Enabler Server (EES) (3B). The ECS (4) provides configurations related to the EES (3B), including details of the edge data network (3) hosting the EES (3B). The UE (1) contains application client(s) (1A) and an Edge Enabler Client (EEC) (1B). The EAS (3A), the EES (3B) and the ECS (4) interacts with the 3GPP Core Network.

However, for performing an authentication between the UE (1) and the edge data network (3) and the ECS (4), the UE (1) depends on the Home Network (HN). Dependency on HN indicates that the UE (1) needs to use a KAUSF key derived from a primary authentication as a trust root to perform the authentication between the UE (1) and the edge data network (3) and the ECS (4). Similarly, AKMA service is required for using network access credentials for the UE (1) authentication, which has dependency on the HN to support AKMA.

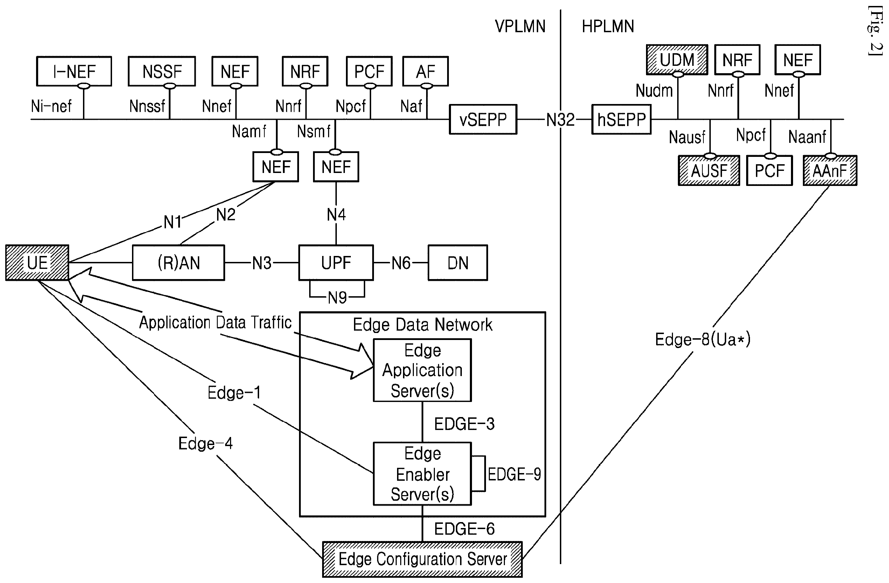

FIG. 2 is a sequence diagram, illustrating a key hierarchy, according dependency on the home network, according to the related art.

Referring to FIG. 2, when the UE (1) is in roaming area, then the dependency on the HN for connectivity with the edge data network (3) for edge applications over the 3GPP core network (2) is not possible. When the UE (1) is in roaming area, then dependency on the HN does not allow enabling edge applications over the 3GPP core network (2), if the HN does not have the capability/support to derive the required security keys to offer secure edge computing service in a serving network. Further, it is not possible for the ECS (4), hosted by a 3rd party service provider offering edge computing services, to have interface with the AAnF of the HN as seen in FIG. 2.

Thus, it is desired to address the above mentioned disadvantages or other shortcomings or at least provide a useful alternative.

The principal aspect of the disclosure is to provide a system and method for establishing secure connections for the edge computing services.

Another aspect of the disclosure is to introduce an entity in the serving network to handle security aspects for enabling the edge computing services.

Another aspect of the disclosure is to provide a Key hierarchy, a key derivation, and a distribution scheme for establishing secure edge computing services.

FIG. 3 is a block diagram illustrating a User Equipment (UE) in communication with an edge data network and an Edge Configuration Server (ECS) over a 3GPP core network in a wireless network for establishing secure connections in the edge computing services, according to an embodiment of the disclosure.

Referring to FIG. 3, a UE (310) in a wireless network (300) may be, for example, but not limited, to a mobile device, a cellular phone, a smart phone, a Personal Digital Assistant (PDA), a tablet computer, a laptop computer, an Internet of things (IoT) device, an Artificial intelligent (AI) device or the like.

In an embodiment, the UE (310) includes an Edge Enabler Client (EEC) (312), a plurality of Application Clients (314), a memory (316), a processor (318), and a communicator (319). An Edge data network (EDN) (330) comprises an Edge Application Server (EAS) (332) and Edge Enabler Servers (EES) (334).

A 3GPP core network (320) comprises a gNB (322), a plurality of network entities (324) and an Edge Inter Working Function (EIWF) (326). The plurality of network entities (324) comprises an Access and Mobility Management Function (AMF) (324a), Authentication Server Function (AUSF) (324b), and a Unified data management (UDM) (324c). The plurality of network entities (324) may have more entities than the mentioned entities.

In an embodiment, the UE (310), the 3GPP core network (320), the Edge Data Network (330) and an Edge Configuration Server (ECS) (340) are responsible for establishing the secure connection for the Edge Computing Services, when the UE (310) is in the roaming area.

In an embodiment, the UE (310) performs an initial registration procedure with the 3GPP core network (320) to get a 5th Generation Core network access. The initial registration procedure is performed by the UE (310) as defined in a 3GPP specification TS 23.502. After successful initial registration procedure or end of a network access authentication procedure, the UE (310) and the AMF (324a) are in possession of a key KAMF derived from a key KSEAF as described in the 3GPP specification TS 33.501, clause 6.1.

The 3GPP core network (320) and the UE (310) calculates the Key KSEAF from another key KAUSF as described in TS 33.501. The AMF (324a) and the UE (310) calculates the key KAMF from KSEAF as described in TS 33.501.

Further, the UE (310) receives a trigger for configuring the Edge Computing Service from the Edge Enabler Client (312). Upon receiving the trigger, the UE (310) derives an Edge key (KEDGE) and a key KECS associated with the for Edge Computing services. The derivation of all the key is explained in detail in the specification below.

Further, the plurality of network entities (324) in the 3GPP core network (320) also derives the Edge Key (KEDGE) based on a capability of the UE (310) of supporting the Edge Computing Services as determined during the initial registration procedure.

After the edge key (KEDGE) is generated, the AMF (324a) sends the generated KEDGE and a key set identifier (ngKSI) to the EIWF (326) together with a UE identifier (ID) and/or a Subscription Permanent Identifier (SUPI) and/or Edge Enabler Client (312) ID and/or Temp Edge Computing service ID of the UE (310) using a key registration request service operation. The EIWF (326) stores the information sent by the AMF (324a).

Further, a security context related parameters are carried by the 3GPP core network (320) to the ECS (340), which initiates the ECS (340) to obtain a KECS key by contacting the EIWF (326) using the security context related parameters. In an embodiment, the security context related parameters are carried as part of a procedure for establishment of security credentials or as part of detailed provisioning procedure described in the 3GPP specification TS 23.558.

Once KECS is obtained/established by the ECS (340), a security context establishment status is indicated to the EEC (312). In an embodiment, a Pre-Shared Key (PSK) is generated from the KECS or the KECS is used as the PSK.

The EEC (312) upon receiving an initial security context establishment response as successful, the initiates a Transport Layer Security (TLS) establishment procedure to establish the TLS session with the PSK based authentication method for mutual authentication or for Client side authentication for Edge Computing Services.

In an embodiment, PSK based authentication is used for mutual authentication for both the EEC (312) and the ECS (340) authentication. In another embodiment, a Server certificate is used for authentication of the ECS (340) and the PSK is used for the EEC (312) authentication. In yet another embodiment, the KECS is used as the PSK. In an embodiment, the PSK is identified with the at least one of: 128 least significant bits of the KECS or 128 most significant bits of the KECS. In an embodiment, an IKEv2 procedure is performed instead of the TLS based authentication. An IKEv2 PSK-based authentication or an EAP-PSK over IKEv2 authentication is performed to establish IPSec between the EEC and the ECS. A dynamically generated PSK (KECS), is used in the IKEv2 procedure.

In an embodiment, a secondary authentication as defined in TS 33.501 is performed instead of the TLS based authentication. The EAP-PSK authentication is performed between the EEC (312) and the ECS (340), and the dynamically generated PSK (KECS), is used.

In an embodiment, if IPSec is established using IKEv2, instead of the TLS, then the message exchange between the EEC (312) and the ECS (340) are protected using the IPsec.

In an embodiment, if the secondary authentication is performed, instead of TLS based authentication, then a message exchange between the EEC (312) and the ECS (340) are protected using an application layer protection (for example, JSON Web Encryption (JWE, specified in RFC 7516)).

Once a secure edge interface between the UE (310) and the ECS (340) is established, the UE (310) initiates the service provisioning procedure with the ECS (340) as specified in clause 8.3 in TS 23.558 over the secure edge interface.

In an embodiment, the UE (310) performs an EEC (312) registration as specified in clause 8.4.2 in TS 23.558 [2] and/or a discovery as specified in clause 8.5 in TS 23.558 [2] with the EES (334).

The UE (310) obtains necessary credential from the ECS (340). Before initiating the EEC (312) registration and/or discovery procedure, the UE (310) performs the Initial Security Context Establishment procedure with the EES (334). The Initial Security Context Establishment request carry the security context related parameters, which initiates the EES (334) to obtain the key KEES by contacting the ECS (340) using the security context related parameters. Once KEES is established, the EES (334) indicates the security context establishment status to the EEC (312).

On receiving the initial security context establishment response as successful, the EEC (312) initiates the TLS establishment procedure to establish the TLS session with the PSK based authentication method for mutual authentication or for Client side authentication.

In an embodiment, PSK based authentication is used for mutual authentication for both the EEC (312) and the ECS (340) authentication. In another embodiment, a Server certificate is used for authentication of the ECS (340) and the PSK is used for the EEC (312) authentication. In yet another embodiment, the KECS is used as the PSK. In an embodiment, the PSK is identified with the at least one of: 128 least significant bits of the KECS or 128 most significant bits of the KECS. In an embodiment, an IKEv2 procedure is performed instead of the TLS based authentication. An IKEv2 PSK-based authentication or an EAP-PSK over IKEv2 authentication is performed to establish IPSec between the EEC and the ECS. A dynamically generated PSK (KECS), is used in the IKEv2 procedure.

In an embodiment, a secondary authentication as defined in TS 33.501 is performed instead of the TLS based authentication. The EAP-PSK authentication is performed between the EEC (312) and the ECS (340), and the dynamically generated PSK (KECS), is used.

In an embodiment, if IPSec is established using IKEv2, instead of the TLS, then the message exchange between the EEC (312) and the ECS (340) are protected using the IPsec

In an embodiment, if the secondary authentication is performed, instead of TLS based authentication, then a message exchange between the EEC (312) and the ECS (340) are protected using an application layer protection (for example, JSON Web Encryption (JWE, specified in RFC 7516)).

The UE (310) initiates the EEC (312) registration procedure and/or discovery procedure with the EES (334), over the established secure edge interface.

In an embodiment, the UE (310) obtains service from the EAS (332), by obtaining key KEAS from the EES (334). The UE (310) also obtains security policy and the relevant keys from the EES (334). Thus as seen the secure edge is established between the EEC (112) and the EDN (330) and between the EEC (112) and the ECS (340).

The memory (316) stores instructions to be executed by the processor (318) for establishing the secure connection for the Edge Computing Services. The memory (316) storage elements may include magnetic hard discs, optical discs, floppy discs, flash memories, or forms of electrically programmable memories (EPROM) or electrically erasable and programmable (EEPROM) memories.

In addition, the memory (316) may, in some examples, be considered a non-transitory storage medium. The term "non-transitory" may indicate that the storage medium is not embodied in a carrier wave or a propagated signal. However, the term "non-transitory" should not be interpreted that the memory (316) is non-movable. In some examples, the memory (316) can be configured to store larger amounts of information than the memory. In certain examples, a non-transitory storage medium may store data that can, over time, change (e.g., in Random Access Memory (RAM) or cache). The memory (103) can be an internal storage or it can be an external storage unit of the UE (110), a cloud storage, or any other type of external storage.

In an embodiment, the processor (318) communicates with EEC (312), the memory (316), the communicator (319) and the plurality of application clients (314). The processor (318) is configured to execute instructions stored in the memory (316) for establishing secure connection for the Edge Computing Services. The processor (318) may include one or a plurality of processors, may be a general purpose processor, such as a central processing unit (CPU), an application processor (AP), or the like, a graphics-only processing unit such as a graphics processing unit (GPU), a visual processing unit (VPU), and/or an Artificial intelligence (AI) dedicated processor such as a neural processing unit (NPU).

In an embodiment, the communicator (319) is configured for communicating internally between internal hardware components and with external devices via one or more networks. The communicator (319) includes an electronic circuit specific to a standard that enables wired or wireless communication.

In an embodiment the proposed method and the UE (310) provide different scenarios where secure channels are established with the ECS (340), the EAS (332) and the EES (334) for configuring and obtaining the Edge Computing Services.

Although the FIG. 3 shows various hardware components of the UE (110), it is to be understood that other embodiments are not limited thereon. In other embodiments, the UE (310), the 3GPP core network (320) and the EDN (330) may include less or more number of components. Further, the labels or names of the components are used only for illustrative purpose and does not limit the scope of the disclosure. One or more components can be combined together to perform same or substantially similar function to establishment of secure channels foe the Edge Computing Services.

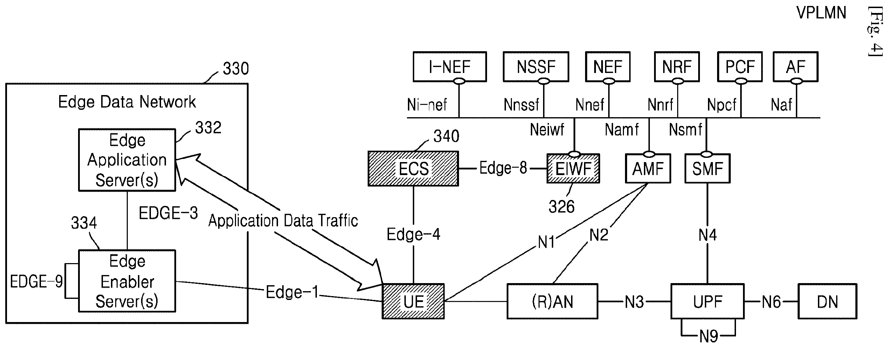

FIG. 4 is a schematic diagram, illustrating the new entity EIWF (326) being introduced in the 3GPP core network (320) for establishment of secure channel for the Edge Computing Service, according to an embodiment of the disclosure.

Referring to FIG. 4, the EIWF (326) is a new entity introduced in the 3GPP core network (320) to handle the security procedures related to signaling messages, when the Edge Application Server(s) (332), the Edge Enabler Server (334) and the Edge Configuration Server (340) interacts with the 3GPP core Network (320).

In an embodiment, as the ECS (340) or the EES (334) or the EAS (332) tries to fetch the key from the AMF (324a), the EIWF (326) is introduced. The EIWF (326) acts as an interface between the ECS (340)/EES (334)/EAS (332) and the AMF (324a). Thus the network access procedure and functions are isolated from the service procedure and functions. The reference point EDGE-1 and EDGE-4 shown in FIG. 3, carries the EDGE service relates protocol messages, which is secured using the agreed between UE (310) and EIWF (326) as a result of successful security establishment procedure.

The EDN (330) and the ECS (340) are connected to 3GPP core network (320) via the EIWF (326) for at least security related procedures as seen on FIG. 2. The EIWF (326) interfaces to a 3GPP core network control-plane functions through service based interface. The EIWF (326) interfaces the 3GPP core network control-plane function to the AMF (324a), to obtain the Edge Key (KEDGE) for the Edge computing service. Further, the Edge server(s) requests Edge service specific keys from the EIWF to establish secure EDGE-1 and EDGE-4 interfaces. The EIWF may also provide Edge service specific keys to the EAS to establish secure application specific interface between the UE and the EAS.

The EIWF (326) stores the Edge Key (KEDGE) for the Edge computing service, received/obtained from the AMF (324a), whenever requested by the ECS/EES/EAS. The EIWF (326) interacts with the AMF and the EDGE servers (EAS/EES/ECS) using Service-based Interfaces. When the ECS is located in the operator's network, the EIWF uses Service-Based Interface to communicate with the ECS directly. When the ECS/EES is located outside the operator's network, the NEF shall be used to exchange the messages between the ECS/EES and the EIWF.

In an embodiment, an EIWF Fully Qualified Domain Name is either provisioned by the UE (310) or constructed by the ECS (340) and/or EES (334) and/or EAS (332) in either an Operator Identifier FQDN format or a Tracking Area Identity FQDN format as specified in 3GPP TS 23.003. The EIWF FQDN is used as input to a DNS mechanism for EIWF selection.

In an embodiment, the EIWF FQDN is provisioned by the Mobile Network in the UE (310) and the UE (310) provides the EIWF FQDN to the ECS (340) and/or EES (334) and/or EAS (332) during security context establishment for uniquely identifying/resolving the EIWF (326) by the ECS (340) and/or EES (334) and/or EAS (332).

In an embodiment, the EIWF (326) is collocated with the AMF (324a). In another embodiment, the EIWF (326) is collocated with the Network Exposure Function (NEF). In yet another embodiment, the EIWF (326) is collated with the ECS (340) of a Mobile Network Operator (MNO). In yet another embodiment, the EIWF (326) is collocated with an Authentication and Key Management for Applications (AAnF). AAnF is network entity/function specified in the 3GPP TS 33.535 for Authentication and Key Management for Applications (AKMA).

In an embodiment, based on the Edge Computing Service deployment, the security mechanism to be used for authentication and interface security are pre-configured with the EEC (312), configured by an edge-aware Application Client, configured by the user, provisioned by MNO through 5GC procedure (for illustration propose using NAS procedures like Registration procedure, UE Parameters Update), or derived from a Home Public Land Mobile Network (HPLMN) identifier for non-roaming scenario or from a Visited Public Land Mobile Network (VPLMN) identifier for roaming scenario. The EEC (312) uses the information for authentication and secure interface establishment with the ECS (340) and/or the EES (334) and/or EAS (332).

In an embodiment, the security capability configuration may be one of or a combination of: Authentication method/credential to be used: Certificate, PSK, AKA, Access Token; Authentication protocol: TLS, SSL, IKEv2, EAP, JWS, JWE; Security credentials establishment procedure: AKMA, SN Edge mechanism, Out-of-Band, Secondary authentication as described in the 3GPP specification in TS 33.501.

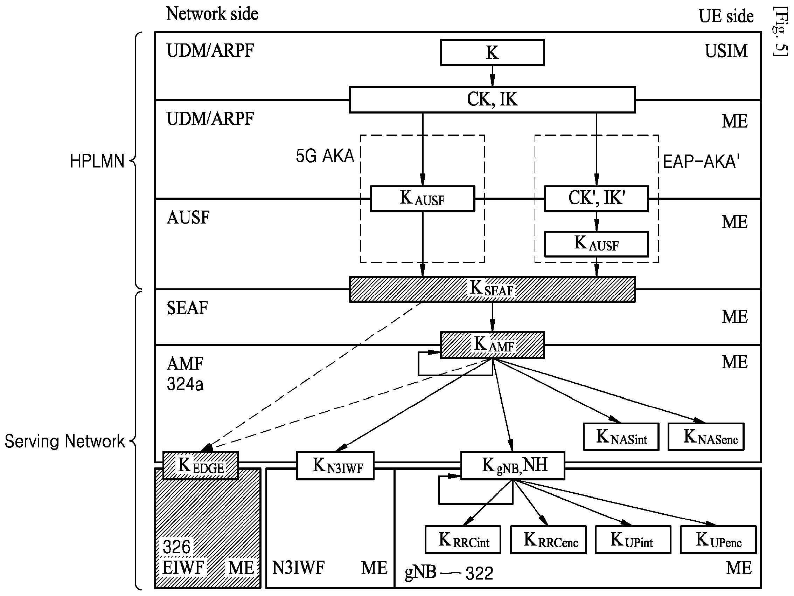

FIG. 5 is a schematic diagram, illustrating key hierarchy and association with different entities in a wireless network for establishing secure channel for the Edge Computing Services, according to an embodiment of the disclosure.

Referring to FIG. 5, the different entities belong to a serving network and the HPLMN. In an embodiment, the severing network specific keys KSEAF or KAMF are used for the Edge Computing Services related key derivations, as shown in FIG. 5.

A Security Anchor Function (SEAF) in the 3GPP core network (320) and the UE (310) calculates the KSEAF from a KAUSF as described in TS 33.501. The SEAF derives the KEDGE from the KSEAF, the ABBA parameter and the SUPI as described below in the specification and provides the ngKSI and the KEDGE to the EIWF (326). Similarly the UE (310) derives the KEDGE from the KSEAF, the ABBA parameter and the SUPI, in the same way as the SEAF.

In another embodiment, the severing network specific NAS security context key KAMF is used for the Edge Computing Service related key derivations, as shown in FIG. 5. The AMF (324a) and the UE (310) calculates the KAMF from KSEAF as described in TS 33.501. The AMF (324a) derives the KEDGE from the KAMF, and provides the ngKSI and the KEDGE to the EIWF (326). Similarly the UE (310) derives the KEDGE from the KAMF, in the same way as the AMF (324a).

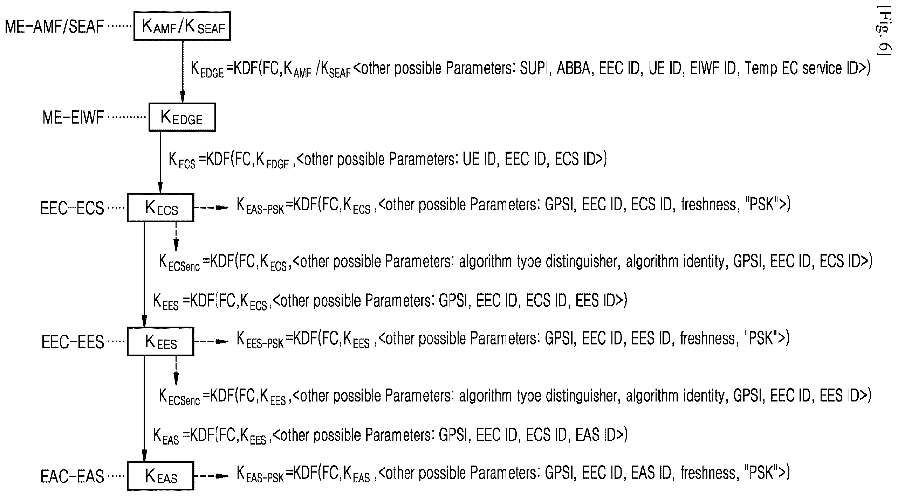

In an embodiment, the key hierarchy for Edge Computing Service is detailed in FIG. 6 includes the following keys: KEDGE, KECS, KEES, KEAS, KECSenc, KEESenc, KEECPSK, KECSPSK and KEASPSK.

The keys for the EIWF (326) for the Edge Computing Service are: KEDGE which is a key derived by the ME and SEAF/AMF (324a) from KSEAF/KAMF for the Edge Computing Service.

The key for the ECS (340) is KECS which a key derived by ME and EIWF (326) from KEDGE. Optionally, KECS-PSK and/or KECSenc are further derived by EEC (312) and ECS (340) from KECS when performing secure association for secure communication with the ECS (340).

The key for the EES (334) is KEES which is a key derived by EEC (312) and ECS (340) from KECS. Optionally, KEES-PSK and/or KEESenc are further derived by EEC (312) and EES (334) from KEES when performing secure association for secure communication with the EES (334).

The key for the EAS (332) is KEAS which is a key derived by EEC (312) and EES (334) from KEES. Optionally, KEAS-PSK and/or KEASenc are further derived by Application Client (AC) in the UE and EAS (332) from KEAS when performing secure association for secure communication over application specific interface between them.

FIG. 6 is a schematic diagram, illustrating a key hierarchy for Edge Computing Services, according to an embodiment of the disclosure.

Referring to FIG. 6, in the embodiment, the KECS is provided by the EIWF (326) to the ECS (340) over the EDGE-8 for securing the communication over the EDGE-4. The EES (334) obtains the key (KEES) over EDGE-6 from the ECS (340) to secure EDGE-1 interface and the EAS (332) obtains the key (KEAS) over EDGE-3 from the ECS (340) to secure the edge application specific interface.

In an embodiment, the key hierarchy for the Edge Computing Services as shown in FIG. 6 includes the following keys: KEDGE, KECS, KEES, KEAS, KECSenc, KEESenc, KEECPSK, KECSPSK and KEASPSK.

*115The key for EIWF (326) for the Edge Computing Service is KEDGE which is a key derived by ME and SEAF/AMF (324a) from KSEAF/KAMF for the Edge Computing Service.

The key for ECS (340) for the Edge Computing Service is KECS which is a key derived by ME and EIWF (326) from KEDGE. Optionally, KECS-PSK and/or KECSenc are further derived by EEC (312) and ECS (340) from KECS when performing secure association for secure communication over EDGE-4.

The Key for the EES (334) is KEES which is a key derived by EEC (312) and ECS (340) from KEDGE. Optionally, KEES-PSK and/or KEES are further derived by EEC (312) and EES (334) from KEES when performing secure association for secure communication over EDGE-1.

The Key for the EES (334) KEAS which is a key derived by EEC (312) and ECS (340) from KEDGE. Optionally, KEAS-PSK and/or KEAS are further derived by AC and EAS (332) from KEAS when performing secure association for secure communication over application specific interface between them.

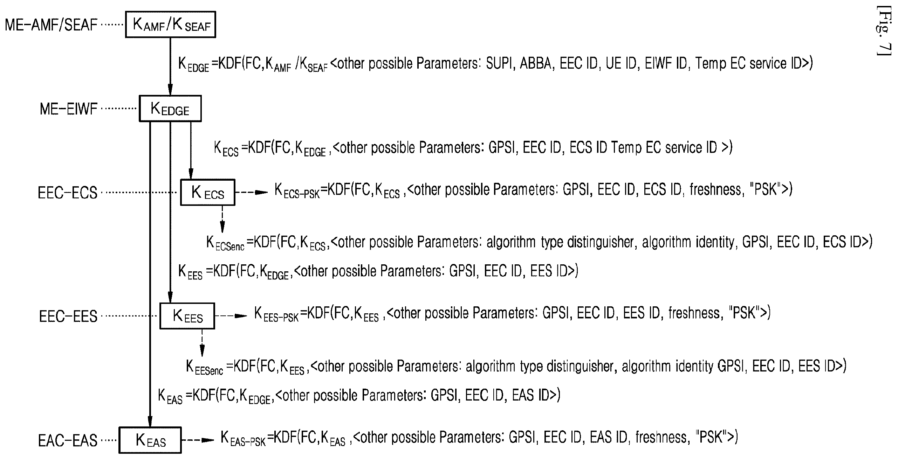

FIG. 7 is a schematic diagram illustrating a Key hierarchy for establishing the secure connection for the Edge Computing Services, according to an embodiment of the disclosure.

Referring to FIG. 7, in an embodiment the KECS is provided by the EIWF (326) to the ECS (340) over EDGE-8 for securing the communication over the EDGE-4. The EES (334) obtains the key (KEES) over EDGE-2 interface from the EIWF (326) to secure EDGE-1 interface and EAS obtains the key (KEAS) over EDGE-7 interface from the EIWF (326) to secure the edge application specific interface.

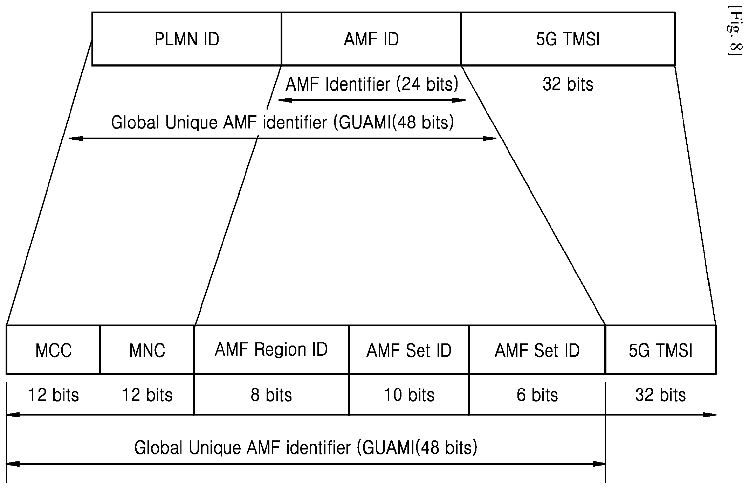

FIG. 8 is a schematic diagram, illustrating a structure of a GUTI for identifying a UE context in the AMF (324a) according to an embodiment of the disclosure.

Referring to FIG. 8, the UE context in the AMF (324a) is identified using the Globally Unique Temporary Identifier (GUTI) and/or SUPI, when the context needs to be retrieved based on the request from other entities (for example, target AMF (324a), N3IWF, gNB (322). However GUTI and/or SUPI cannot be used by the external domains or 5G verticals to identify the UE context.

The EIWF (326) identifies a particular SEAF/AMF (324a) for the UE (100) in the serving network, using the Global Unique AMF Identifier (GUAMI) or AMF Identifier provided by the UE (310). The format and size of the 5G-GUTI [TS 23.003] is as following:
<5G-GUTI> = <GUAMI><5G-TMSI>, where <GUAMI> = <MCC><MNC><AMF Identifier> and <AMF Identifier> = <AMF Region ID><AMF Set ID><AMF Pointer> MCC and MNC shall have the same field size as in earlier 3GPP systems. A5G-TMSI is of 32 bits length. The AMF Region ID is of 8 bits length. The AMF Set ID is of 10 bits length. The AMF Pointer is of 6 bits length.

In an embodiment, either UE ID and/or Edge Enabler Client ID (EEC ID) is used to uniquely identify the UE context in the SEAF/AMF (324a). In an embodiment, the EEC ID is provided by the UE (310) to the SEAF/AMF (324a) in a Non-access stratum (NAS) procedure. The NAS procedure being Registration procedure. On receiving the EEC ID from the UE (310) after establishment of the NAS context, the SEAF/AMF (324a) stored the EEC ID of the UE (310) along with the UE NAS security context. Once the SEAF/AMF (324a) stores the EEC ID of the UE (310), the EEC ID is used to uniquely identify the UE's current 5G security context to generate security credentials (for example, KEDGE and/or KECS) for EC service. In an embodiment, the UE ID being at least one of: Graphics Processor Software Interface (GPSI), external ID, MSISDN, and the like.

In another embodiment, the EEC ID and/or UE ID is provided by the UDM, as part of subscription data (AccessAndMobilitySubscriptionData), to the AMF (324a) for example, as part of Nudm_SubscriberDataManagement_Get Response, so that AMF (324a) uses the EEC ID and/or UE ID to uniquely identify the UE's contexts in it.

In yet another embodiment, the SEAF/AMF (324a) assigns a Temp EC service ID for the Edge Computing Service to identify the UE context within the SEAF/AMF (324a). The UE (310) provides the Temp EC service ID provided by the SEAF/AMF (324a) to the ECS (340)/EES (334)/EAS (332), for identification of the UE context in the SEAF/AMF (324a) and to establish the security credentials for secure communication between the UE (310) and the EDGE servers (ECS/EES/EAS).

The ngKSI which is used to identify the KAMF is used as the Edge Key Set Identifier (eKSI) for identification of the KEDGE also.

When the UE (310) receives request for secure channel establishment procedure (initial context establishment request), the UE (310) provides at least one of the following security context related parameters to identify the security context in the SEAF/AMF (324a) and to derive the Edge Computing service security credentials: GUTI, SUPI, UE ID (GPSI, external ID, MSISDN), ngKSI, AMF Identifier, GUAMI, EEC ID, Temp EC service ID.

In an embodiment, the EIWF (326) contacts AAnF, based on the AKMA Key ID provided by the UE (310) and obtains the KAF. The KAF is used as the KEDGE between the UE (310) and the EIWF (326).

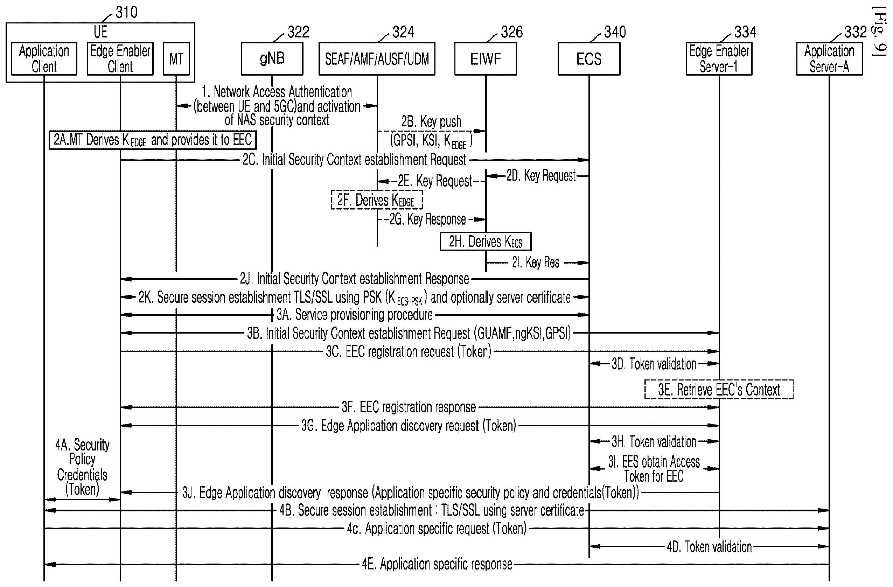

FIG. 9 is a sequence diagram, illustrating a method flow for Edge mechanism for EDGE-4 interface security credentials establishment and token based authentication and authorization mechanism for EDGE-1 interface, according to an embodiment of the disclosure.

Referring to FIG. 9, at Operation 1: The UE (310) performs the initial registration procedure as defined in TS 23.502 to get the 3GPP core network (320) access. At the end of the network access authentication procedure as described in TS 33.501, clause 6.1, the UE (310) and the AMF (324a) are in possession of the key KAMF derived from KSEAF.

Operation 2A: The UE (310) derives the KEDGE key as specified above and optionally the further keys (KECS) for the Edge Computing service, whenever there is trigger to get Edge Computing Service configuration from the upper layers (for example the EEC (312)). In an embodiment, the key derivation operation is skipped, if the UE (310) holds a valid KECS for the ECS (340).

Operation 2B: In an embodiment, based on the UE's capability to support the Edge Computing service, the SEAF/AMF (324a) derives the KEDGE as explained above. After key (KEDGE) is generated, the SEAF/AMF (324a) sends the generated KEDGE and the ngKSI to the EIWF (326) together with UE ID and/or SUPI and/or EEC ID and/or Temp EC service ID of the UE (310) using the key registration request service operation. The EIWF (326) stores the latest information sent by the SEAF/AMF (324a).

Operations 2C-2J: The Edge Computing service provisioning procedures (for example, a procedure for establishment of the security credentials or as part of detailed provisioning procedure TS 23.558 v1.0.0) carry the security context related parameters at operation 2C, which initiates the ECS (340) to obtain the KECS by contacting the EIWF (326) using the security context related parameters at operation 2D. At Operation 2H, the KECS is derived by the EIWF (326) and forwarded to the ECS (340). At operation 2I, the PSK is generated from KECS as described earlier or KECS is used as the PSK. The ECS (340) indicates the security context establishment status to the EEC (312) in Operation 2J.

Operation 2K: On receiving the initial security context establishment response as successful, the EEC (312) initiates the TLS establishment procedure to establish the TLS session with the PSK based authentication method for mutual authentication or for Client side authentication.

Operations 2E-2G is performed, when the EIWF (326) does not have valid KEDGE for the UE (310). At operation 2E, the EIWF (326) sends a key request to the AMF (324a). At operation 2F, the AMF (324a) derives the KEDGE. At operation 2G, the AMF (324a) sends the KEDGE to the EIWF (326).

Once TLS is established, the UE (310) initiates the service provisioning procedure with the ECS (340) as specified in clause 8.3 in TS 23.558 over the secure interface.

Operation 2E: In an embodiment, PSK based authentication is used for mutual authentication for both the Edge Enabler Client (312) and the Edge configuration Server (340) authentication.

In an embodiment, the server certificate is used for authentication of the ECS and PSK is used for EEC authentication.

In an embodiment, the KECS is used as the PSK. In an embodiment, PSK identified with the at least one of: 128 least significant bits of the KECS or 128 most significant bits of the KECS.

In an embodiment, IKEv2 procedure is performed instead of TLS in Operation 2K. The IKEv2 PSK-based authentication or EAP-PSK over IKEv2 authentication is performed to establish IPSec between the EEC (312) and the ECS (340). The dynamically generated PSK (KECS), is used in the IKEv2 procedure.

In an embodiment, the secondary authentication as defined in TS 33.501 is performed based on the security configuration instead of TLS in Operation 2K. The EAP-PSK authentication is performed between the EEC (312) and the ECS (340). The dynamically generated PSK (KECS), is used.

In an embodiment, the service provisioning procedures being, at least one of: request-response procedure, subscribe-notify procedures including, subscription update procedure and unsubscribe procedure.

In an embodiment, if IPSec is established using IKEv2 is performed, instead of TLS in Operation 2K, then the message exchange between the EEC (312) and the ECS (340) are protected using the IPsec.

In an embodiment, if secondary authentication is performed, instead of TLS in Operation 2K, then the message exchange between the EEC (312) and the ECS (340) are protected using application layer protection for example, JSON Web Encryption JWE, specified in RFC 7516.

Operations 3A to 3J: The UE (310) performs the EEC registration as specified in clause 8.4.2 in TS 23.558 and discovery as specified in clause 8.5 in TS 23.558 [2] with the EES (334).

Operation 3A: The UE (310) obtains the necessary credential from the ECS (340), via the established secure interface EDGE-4. In the illustrative example, token is issued by the ECS (340) to the UE (310), to establish secure EDGE-1 interface with the EES (334). The token is issued to the EEC (312) during any of the service provisioning procedures.

Operation 3B: Before sending the access token to the EES (334), the UE (310) and the EES (334) establish a secure TLS connection using a EES server certificate. It is required to protect and to provide the access token to an authentic the EES (334).

Operations 3C, 3D, 3E, and 3F: The UE (310) initiates EEC (312) registration procedure with the EES (334), including the access token obtained from the ECS (340). The authorization check for the EEC (312) registration request is performed by verification of the access token issued by the ECS (340) to the UE (310). The EES (334) obtains the access token validation service from the ECS (340).

In an alternate embodiment, operations 3C-3F are skipped and the EEC (312) performs operations 3G, 3H, 3I, and 3J after operation 3A or 3B (if operation 3B is performed). Operations 3G-3J: When the UE (310) initiates EAS discovery procedure with the EES (334) by including the same access token obtained from the ECS (340), if it is valid. Again, the EES (334) obtains the access token validation service from the ECS (340). In an embodiment, the EES (334) also request and obtains the access token(s) from the ECS (340) for the UE (310) to grant access to the EAS(s) (332). Then in response to the request, the EES (334) includes the EAS (332) access grant token(s), with relevant information like validity time, to the UE (310).

In case, if the access token obtained from the ECS (340) is not valid (due to time limitation), then the EEC (312) requests ECS (340) for a new access token. The access token request message includes the necessary parameters to identify the EEC (312) security context and parameters for authenticity verification. After verification of the authenticity, the ECS (340) provides a new access token to the EEC (312), in response to the request.

Operations 4A, 4B, 4C, 4D, and 4E: In an embodiment, the UE (310) obtains service from the EAS (332), by producing the access token obtained from the EES (334), over the secure TLS connection. The UE (310) also obtains security policy and the relevant access token from the EES (334) in Operation 3J. Before sending the access token to the EAS (332), the UE (310) and the EAS (332) establish a secure channel using the EAS server certificate. It is required to protect and to provide the access token to authentic the EAS (332). The EAS (332) obtains the access token validation service from the ECS (340) through the EES (334). After successful validation of the access token, the UE (310) obtains the Edge Computing service from the EAS (332).

In an embodiment, if the ECS (340) wants to send Service provisioning notification and there is no active TLS session, then the ECS (340) send Authentication required indication to the EEC (312) or trigger re-authentication procedure. Then the EEC (312) initiates secure connection establishment procedure (TLS/IKEv2/PDU session establishment procedure, so that network initiates the Secondary authentication procedure or responds to the re-authentication procedure.

The various actions, acts, blocks, operations, or the like in the sequence diagram may be performed in the order presented, in a different order or simultaneously. Further, in some embodiments, some of the actions, acts, blocks, operations, or the like may be omitted, added, modified, skipped, or the like without departing from the scope of the disclosure.

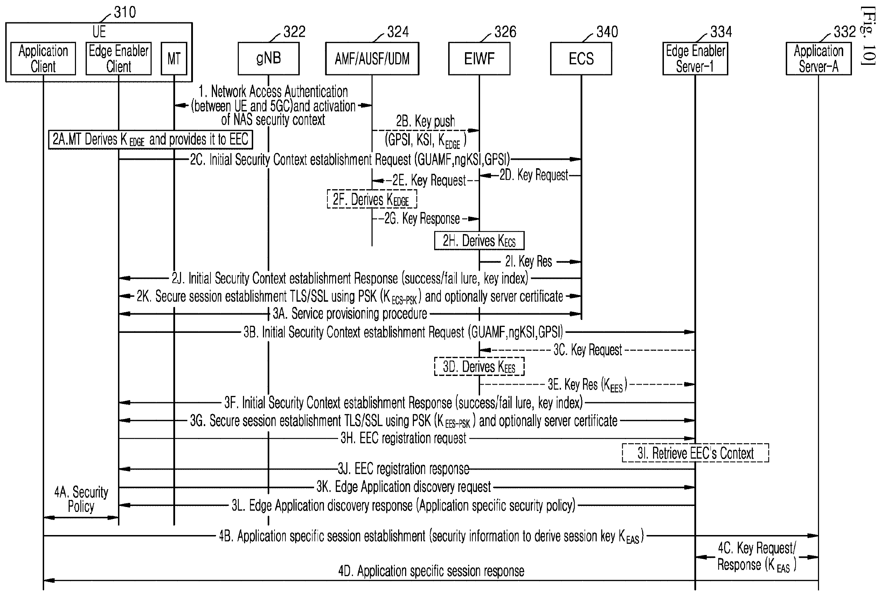

FIG. 10 is a sequence diagram, illustrating a method of establishing secure connection for the Edge Computing Services, according to a claimed embodiment of the disclosure.

Referring to FIG. 10, the serving network edge mechanism for EDGE-4 interface security credentials establishment and also PSK based authentication and authorisation mechanism for EDGE-1 interface is used, where PSK or key to derive PSK is obtained from EIWF (326)

Operation 1: Operation 1: The UE (310) performs the initial registration procedure as defined in TS 23.502 to get the 3GPP core network (320) access. At the end of the network access authentication procedure as described in TS 33.501, clause 6.1, the UE (310) and the AMF (324a) are in possession of the key KAMF derived from KSEAF.

Operation 2A: The UE (310) derives the KEDGE key as specified above and optionally the further keys (KECS) for the Edge Computing service, whenever there is trigger to get Edge Computing Service configuration from the upper layers (for example the EEC (312)). In an embodiment, the key derivation operation is skipped, if the UE (310) holds a valid KECS for the ECS (340).

Operation 2B: In an embodiment, based on the UE's capability to support the Edge Computing service, the SEAF/AMF (324a) derives the KEDGE as explained above. After key (KEDGE) is generated, the SEAF/AMF (324a) sends the generated KEDGE and the ngKSI to the EIWF (326) together with UE ID and/or SUPI and/or EEC ID and/or Temp EC service ID of the UE (310) using the key registration request service operation. The EIWF (326) stores the latest information sent by the SEAF/AMF (324a).

Operations 2C-2J: The Edge Computing service provisioning procedures (for example, a procedure for establishment of the security credentials or as part of detailed provisioning procedure TS 23.558 v1.0.0) carry the security context related parameters at operation 2C, which initiates the ECS (340) to obtain the KECS by contacting the EIWF (326) using the security context related parameters at operation 2D. At Operation 2H, the KECS is derived by the EIWF (326) and forwarded to the ECS (340). At operation 2I, the PSK is generated from KECS as described earlier or KECS is used as the PSK. The ECS (340) indicates the security context establishment status to the EEC (312) in operation 2J.

Operations 2D-2I are performed, when the ECS does not have valid KECS for the UE. At operation 2D, the ECS (340) sends a key request to the EIWF (326). At operation 2E, the EIWF (326) sends the key request to the AMF (324a). At operation 2F, the AMF (324a) derives the KEDGE. At operation 2G, the AMF (324a) sends the KEDGE to the EIWF (326). At operation 2H, the EIWF (326) established the KEDGE and forward to the ECS (340).

Operation 2K: On receiving the initial security context establishment response as successful, the EEC (312) initiates the TLS establishment procedure to establish the TLS session with the PSK based authentication method for mutual authentication or for Client side authentication.

In an embodiment, PSK based authentication is used for mutual authentication for both the EEC (312) and the ECS (340).

In an embodiment, the server certificate is used for authentication of the ECS and PSK is used for EEC authentication.

In an embodiment, the KECS is used as the PSK. In an embodiment, PSK identified with the at least one of: 128 least significant bits of the KECS or 128 most significant bits of the KECS.

In an embodiment, IKEv2 procedure is performed instead of TLS in Operation 2K. The IKEv2 PSK-based authentication or EAP-PSK over IKEv2 authentication is performed to establish IPSec between the EEC (312) and the ECS (340). The dynamically generated PSK (KECS), is used in the IKEv2 procedure.

In an embodiment, the secondary authentication as defined in TS 33.501 is performed based on the security configuration instead of TLS in Operation 2K. The EAP-PSK authentication is performed between the EEC (312) and the ECS (340). The dynamically generated PSK (KECS), is used.

In an embodiment, the service provisioning procedures being, at least one of: request-response procedure, subscribe-notify procedures including, subscription update procedure and unsubscribe procedure.

In an embodiment, if IPSec is established using IKEv2 is performed, instead of TLS in Operation 2K, then the message exchange between the EEC (312) and the ECS (340) are protected using the IPsec.

In an embodiment, if secondary authentication is performed, instead of TLS in Operation 2K, then the message exchange between the EEC (312) and the ECS (340) are protected using application layer protection for example, JSON Web Encryption JWE, specified in RFC 7516.

Operation 3A: Once secure EDGE-4 interface is established, the UE (310) initiates the service provisioning procedure with the ECS (340) as specified in clause 8.3 in TS 23.558 over the secure interface.

Operations 3B-3L: The UE (310) performs EEC registration as specified in clause 8.4.2 in TS 23.558 [2] and/or discovery as specified in clause 8.5 in TS 23.558 [2]) with the EES (334).

Operations 3B-3F: The UE obtains the necessary credential from the EIWF (326). Before initiating the EEC registration and/or discovery procedure, the UE (310) performs the initial security context establishment procedure with the EES (334). The initial security context establishment request carry the security context related parameters which initiates the EES (312) to obtain the key KEES by contacting the EIWF (326) using the security context related parameters. Once KEES is established, the PSK is generated from KEES or KEES is used as the PSK, the EES (334) indicates the security context establishment status to the EEC (312).

Operation 3G: On receiving the initial security context establishment response as successful, the EEC (312) initiates the TLS establishment procedure to establish the TLS session with the PSK based authentication method for mutual authentication or for the client side authentication.

In an embodiment, the PSK based authentication is used for mutual authentication for the EEC (312) and the EES (334).

In an embodiment, the server certificate is used for authentication of the EES (334) and PSK is used for the EEC (312) authentication.

In an embodiment, the KEES is used as the PSK. In an embodiment, PSK identified with the at least one of: 128 least significant bits of the KEES or 128 most significant bits of the KEES.

In an embodiment, IKEv2 procedure is performed instead of TLS in Operation 3G. The IKEv2 PSK-based authentication or EAP-PSK over IKEv2 authentication is performed to establish IPSec between the EEC (312) and the EES (334). The dynamically generated PSK (KEES), is used in the IKEv2 procedure.

In an embodiment, the secondary authentication as defined in TS 33.501 is performed, instead of TLS in Operation 3G. EAP-PSK authentication is performed between the EEC (312) and the EES (334). The dynamically generated PSK (KEES), is used.

In an embodiment, if IPSec is established using IKEv2 is performed, instead of TLS in Operation 3G, then the message exchange between the EEC (312) and the EES (334) are protected using the IPsec.

In an embodiment, if secondary authentication is performed, instead of TLS in Operation 3G, then the message exchange between the EEC (312) and the EES (334) are protected using application layer protection for example, JSON Web Encryption (JWE), as specified in RFC 7516.

Operations 3H, 3I, 3J, 3K, and 3L: The UE (310) initiates the EEC registration procedure and/or discovery procedure with the EES (334), over the established secure EDGE-1 interface.

In an alternate embodiment, operations 3H-3J are skipped and the EEC (312) performs operations 3K-3L after operation 3G.

Operations 4A, 4B, 4C, and 4D: In an embodiment, the UE (310) obtains service from EAS (332), by obtaining key KEAS from the EES (334). The UE (310) also obtains security policy and the relevant keys from the EES (334) in Operation 4C.

The various actions, acts, blocks, operations, or the like in the sequence diagram may be performed in the order presented, in a different order or simultaneously. Further, in some embodiments, some of the actions, acts, blocks, operations, or the like may be omitted, added, modified, skipped, or the like without departing from the scope of the disclosure.

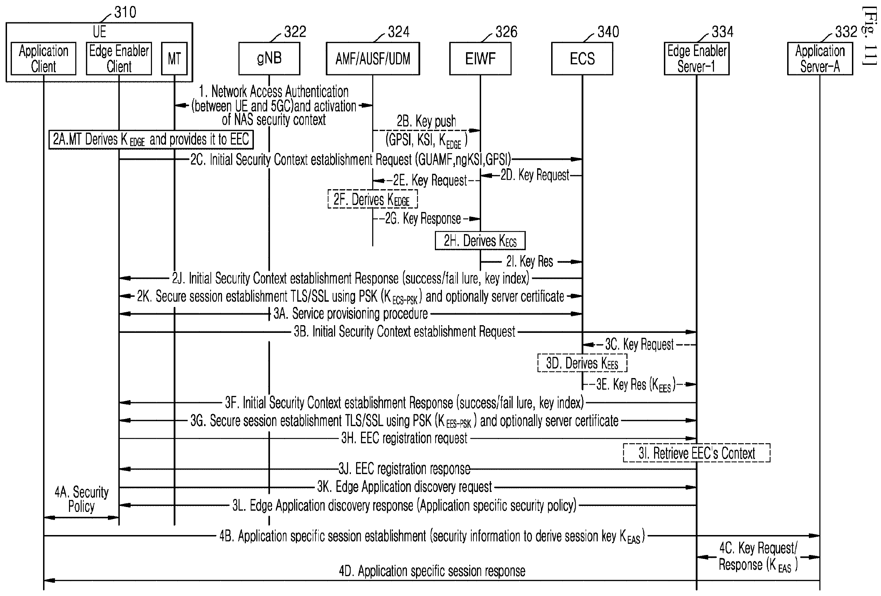

FIG. 11 is a sequence diagram, illustrating a method of establishing secure connection for the Edge Computing Services, according to an embodiment of the disclosure.

Referring to FIG. 11, the sequence in FIG. 11 depicts a flow, where the serving network mechanism for EDGE-4 interface security credentials establishment and also PSK based authentication and authorization mechanism for EDGE-1 interface is used, where PSK or key to derive PSK is obtained from ECS, according to embodiments as disclosed herein.

Operation 1: The UE (310) performs the initial registration procedure as defined in TS 23.502 to get the 3GPP core network (320) access. At the end of the network access authentication procedure as described in TS 33.501, clause 6.1, the UE (310) and the AMF (324a) are in possession of the key KAMF derived from KSEAF.

Operation 2A: The UE (310) derives the KEDGE key as specified above and optionally the further keys (KECS) for the Edge Computing service, whenever there is trigger to get Edge Computing Service configuration from the upper layers (for example the EEC (312)). In an embodiment, the key derivation operation is skipped, if the UE (310) holds a valid KECS for the ECS (340).

Operation 2B: In an embodiment, based on the UE's capability to support the Edge Computing service, the SEAF/AMF (324a) derives the KEDGE as explained above. After key (KEDGE) is generated, the SEAF/AMF (324a) sends the generated KEDGE and the ngKSI to the EIWF (326) together with UE ID and/or SUPI and/or EEC ID and/or Temp EC service ID of the UE (310) using the key registration request service operation. The EIWF (326) stores the latest information sent by the SEAF/AMF (324a).

Operations 2C-2J: The Edge Computing service provisioning procedures (for example, a procedure for establishment of the security credentials or as part of detailed provisioning procedure TS 23.558 v1.0.0) carry the security context related parameters at operation 2C, which initiates the ECS (340) to obtain the KECS by contacting the EIWF (326) using the security context related parameters at operation 2D. At Operation 2H, the KECS is derived by the EIWF (326) and forwarded to the ECS (340). At operation 2I, the PSK is generated from KECS as described earlier or KECS is used as the PSK. The ECS (340) indicates the security context establishment status to the EEC (312) in Operation 2J.

Operation 2K: On receiving the initial security context establishment response as successful, the EEC (312) initiates the TLS establishment procedure to establish the TLS session with the PSK based authentication method for mutual authentication or for Client side authentication.

Operations 2E-2G are performed, when the EIWF (326) does not have valid KEDGE for the UE (310). At operation 2E, the EIWF (326) sends a key request to the AMF (324a). At operation 2F, the AMF (324a) derives the KEDGE. At operation 2G, the AMF (324a) sends the KEDGE to the EIWF (326).

Once TLS is established, the UE (310) initiates the service provisioning procedure with the ECS (340) as specified in clause 8.3 in TS 23.558 over the secure interface.

Operation 3A: Once secure EDGE-4 interface is established, the UE (310) initiates the service provisioning procedure with the ECS (340) as specified in clause 8.3 in TS 23.558 over the secure interface.

Operations 3B-3L: The UE (310) performs EEC registration as specified in clause 8.4.2 in TS 23.558 [2] and/or discovery as specified in clause 8.5 in TS 23.558 [2]) with the EES (334).

Operations 3B-3F: The UE obtains the necessary credential from the ECS (340). Before initiating the EEC registration and/or discovery procedure, the UE (310) performs the initial security context establishment procedure with the EES (334). The initial security context establishment request carry the security context related parameters which initiates the EES (334) to obtain the key KEES by contacting the EIWF (326) using the security context related parameters. Once KEES is established, the PSK is generated from KEES or KEES is used as the PSK, the EES (334) indicates the security context establishment status to the EEC (312) at operation 3F.

Operation 3G: On receiving the initial security context establishment response as successful, the EEC (312) initiates the TLS establishment procedure to establish the TLS session with the PSK based authentication method for mutual authentication or for the client side authentication.

In an embodiment, the PSK based authentication is used for mutual authentication for the EEC (312) and the ECS (340)

In an embodiment, the server certificate is used for authentication of the EES (334) and PSK is used for the EEC (312) authentication.

In an embodiment, the KEES is used as the PSK. In an embodiment, PSK identified with the at least one of: 128 least significant bits of the KEES or 128 most significant bits of the KEES.

In an embodiment, IKEv2 procedure is performed instead of TLS in Operation 3G. The IKEv2 PSK-based authentication or EAP-PSK over IKEv2 authentication is performed to establish IPSec between the EEC (312) and the ECS (340). The dynamically generated PSK (KEES), is used in the IKEv2 procedure.

In an embodiment, the secondary authentication as defined in TS 33.501 is performed, instead of TLS in Operation 3G. EAP-PSK authentication is performed between the EEC (312) and the ECS (340). The dynamically generated PSK (KEES), is used.

In an embodiment, if IPSec is established using IKEv2 is performed, instead of TLS in Operation 3G, then the message exchange between the EEC (312) and the EES (334) are protected using the IPsec.

In an embodiment, if secondary authentication is performed, instead of TLS in Operation 3G, then the message exchange between the EEC (312) and the EES (334) are protected using application layer protection for example, JSON Web Encryption (JWE), as specified in RFC 7516.

Operations 3H-3L: The UE (310) initiates the EEC registration procedure and/or discovery procedure with the EES (334), over the established secure EDGE-1 interface.

In an alternate embodiment, operations 3H-3J are skipped and the EEC (312) performs operations 3K-3L after operation 3G.

Operations 4A, 4B, 4C, and 4D: In an embodiment, the UE (310) obtains service from EAS (332), by obtaining key KEAS from the EES (334). The UE (310) also obtains security policy and the relevant keys from the EES (334) in Operation 4C.

The various actions, acts, blocks, operations, or the like in the sequence diagram may be performed in the order presented, in a different order or simultaneously. Further, in some embodiments, some of the actions, acts, blocks, operations, or the like may be omitted, added, modified, skipped, or the like without departing from the scope of the disclosure.

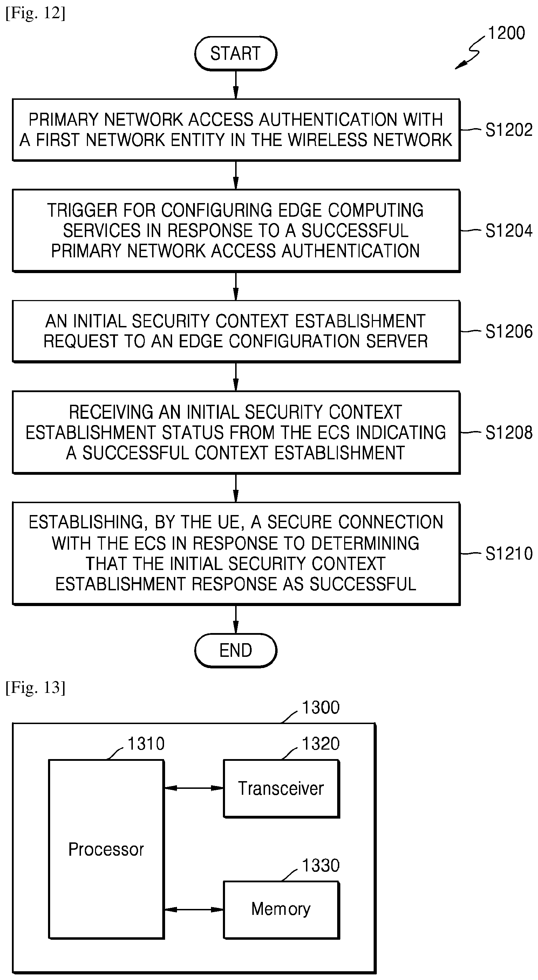

FIG. 12 is a flow diagram, illustrating a method of establishing secure connection for the Edge Computing Services, according to an embodiment of the disclosure.

Referring to FIG. 12, at operation S1202, of method (1200), the method discloses performing, by the UE (310), a primary network access authentication with a first network entity in a wireless network (300). In the embodiment the first network entity is the AMF (324a). In another embodiment, the first network entity may be the AUSF (324b), and the UDM (324c). The primary network access authentication is performed as described in TS 33.501.

At operation S1204, the UE (310) detects the trigger for configuring the edge computing services in response to a successful primary network access authentication. In an embodiment the Edge Configuration Server (ECS) (340) may send the trigger to the UE (310) for configuring the edge computing services.

At operation S1206, sending, by the UE (310), an initial security context establishment request to an Edge Configuration Server, wherein the request comprises a plurality of security context related parameters, wherein the plurality of security context parameters initiates the ECS (340) obtain an authentication Key from a second network entity in the wireless network.

At operation S1208, the UE (310) receives the initial security context establishment status from the ECS indicating a successful context establishment based on the successful establishment of the authentication key by the ECS (340). At operation S1210, the UE (310) initiates the secure channel established procedure with the ECS in response to determining that the initial security context establishment response as successful.

FIG. 13 illustrates a server according to an embodiment of the disclosure.

Referring to the FIG. 13, a server 1300 may include a processor 1310, a transceiver 1320 and a memory 1330. However, all of the illustrated components are not essential. The server 1300 may be implemented by more or less components than those illustrated in FIG. 13. In addition, the processor 1310 and the transceiver 1320 and the memory 1330 may be implemented as a single chip according to another embodiment.

The server 1300 may correspond to the ECS or the EES described above.

The aforementioned components will now be described in detail.

The processor 1310 may include one or more processors or other processing devices that control the proposed function, process, and/or method. Operation of the server 1300 may be implemented by the processor 1310.

The transceiver 1320 may include a RF transmitter for up-converting and amplifying a transmitted signal, and a RF receiver for down-converting a frequency of a received signal. However, according to another embodiment, the transceiver 1320 may be implemented by more or less components than those illustrated in components.

The transceiver 1320 may be connected to the processor 1310 and transmit and/or receive a signal. The signal may include control information and data. In addition, the transceiver 1320 may receive the signal through a wireless channel and output the signal to the processor 1310. The transceiver 1320 may transmit a signal output from the processor 1310 through the wireless channel.

The memory 1330 may store the control information or the data included in a signal obtained by the server 1300. The memory 1330 may be connected to the processor 1310 and store at least one instruction or a protocol or a parameter for the proposed function, process, and/or method. The memory 1330 may include read-only memory (ROM) and/or random access memory (RAM) and/or hard disk and/or CD-ROM and/or DVD and/or other storage devices.

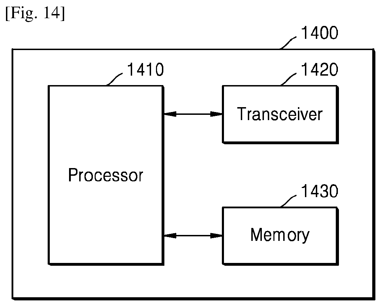

FIG. 14 illustrates a user equipment (UE) according to an embodiment of the disclosure.

Referring to the FIG. 14, a UE 1400 may include a processor 1410, a transceiver 1420 and a memory 1430. However, all of the illustrated components are not essential. The UE 1400 may be implemented by more or less components than those illustrated in FIG. 14. In addition, the processor 1410 and the transceiver 1420 and the memory 1430 may be implemented as a single chip according to another embodiment.

The aforementioned components will now be described in detail.

The processor 1410 may include one or more processors or other processing devices that control the proposed function, process, and/or method. Operation of the UE 1400 may be implemented by the processor 1410.

The transceiver 1420 may include a RF transmitter for up-converting and amplifying a transmitted signal, and a RF receiver for down-converting a frequency of a received signal. However, according to another embodiment, the transceiver 1420 may be implemented by more or less components than those illustrated in components.

The transceiver 1420 may be connected to the processor 1410 and transmit and/or receive a signal. The signal may include control information and data. In addition, the transceiver 1420 may receive the signal through a wireless channel and output the signal to the processor 1410. The transceiver 1420 may transmit a signal output from the processor 1410 through the wireless channel.

The memory 1430 may store the control information or the data included in a signal obtained by the UE 1400. The memory 1430 may be connected to the processor 1410 and store at least one instruction or a protocol or a parameter for the proposed function, process, and/or method. The memory 1430 may include read-only memory (ROM) and/or random access memory (RAM) and/or hard disk and/or CD-ROM and/or DVD and/or other storage devices.

The various actions, acts, blocks, operations, or the like in the method 1200 may be performed in the order presented, in a different order or simultaneously. Further, in some embodiments, some of the actions, acts, blocks, operations, or the like may be omitted, added, modified, skipped, or the like without departing from the scope of the disclosure.

Forgoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation.

While the disclosure has been shown and described with reference to various embodiments thereof, it will be understood by those skilled in the art that various changes in form and details may be made therein without departing from the scope of the disclosure as defined by the appended claims.

## Claims

1. A method performed by a first network entity (326) in a communication system supporting an Edge application, the method comprising:
receiving (Fig. 10 item 2B) a first key and key identifier information and a Subscription Permanent Identifier, SUPI, of a user equipment, UE (310), from a Security Anchor Function, SEAF (324a), wherein the first key is generated based on a key for the SEAF (324a) after primary authentication between the UE (310) and an Authentication Server Function, AUSF (324b);
receiving (Fig. 10 item 2D), from a second network entity (340), a key request which is based on a request from the UE (310), the request from the UE (310) comprising the key identifier information;
obtaining (Fig. 10 item 2H) a second key for the second network entity (340), based on the first key; and
transmitting (Fig. 10 item 2I), to the second network entity (340), a key response comprising the second key for the second network entity (340).

2. The method of claim 1, wherein the first network entity (326) is collocated with an Authentication and Key Management for Applications, AAnF, in the communication system.

3. The method of claim 1, wherein:
the UE (310) is in a roaming area, and
the first network entity (326) and the SEAF (324a) are in a Visited Public Land Mobile Network, VPLMN.

4. The method of claim 1, wherein the second network entity (340) is an Edge Configuration Server, ECS.

5. The method of claim 1, wherein the Edge application includes an Edge computing service.

6. A first network entity (326) in a communication system supporting an Edge application, the first network entity (326) comprising:
a transceiver; and
at least one processor coupled to the transceiver, the at least one processor being configured to:
receive (Fig. 10 item 2B) a first key and key identifier information and a Subscription Permanent Identifier, SUPI, of a user equipment, UE (310), from a Security Anchor Function, SEAF (324a), wherein the first key is generated based on a key for the SEAF (324a) after primary authentication between the UE (310) and an Authentication Server Function, AUSF (324b),
receive (Fig. 10 item 2D), from a second network entity (340), a key request which is based on a request from the UE (310), the request from the UE (310) comprising the key identifier information,
obtain (Fig. 10 item 2H) a second key for the second network entity (340), based on the first key, and
transmit (Fig. 10 item 2I), to the second network entity (340), a key response comprising the second key for the second network entity (340).

7. The first network entity (326) of claim 6, wherein the first network entity (326) is collocated with an Authentication and Key Management for Applications, AAnF, in the communication system.

8. The first network entity (326) of claim 6, wherein:
the UE (310) is in a roaming area, and
the first network entity (326) and the SEAF (324a) are in a Visited Public Land Mobile Network, VPLMN.

9. The first network entity (326) of claim 6, wherein the second network entity (340) is an Edge Configuration Server, ECS.

10. The first network entity (326) of claim 6, wherein the Edge application includes an Edge computing service.

## Patentansprüche

1. Verfahren, das von einer ersten Netzwerkeinheit (326) in einem Kommunikationssystem ausgeführt wird, das eine Edge-Anwendung unterstützt, wobei das Verfahren umfasst:
Empfangen (FIG. 10 Punkt 2B) eines ersten Schlüssels und von Schlüsselkennnungsinformationen und einer permanenten Abonnementkennung, SUPI, eines Benutzergeräts, UE (310), von einer Sicherheitsankerfunktion, SEAF (324a), wobei der erste Schlüssel basierend auf einem Schlüssel für die SEAF (324a) nach primärer Authentifizierung zwischen dem UE (310) und einer Authentifizierungsserverfunktion, AUSF (324b), erzeugt wird;
Empfangen (FIG. 10 Punkt 2D), von einer zweiten Netzwerkeinheit (340), einer Schlüsselanforderung, die auf einer Anforderung vom UE (310) basiert, wobei die Anforderung vm UE (310) die Schlüsselkennungsinformationen umfasst;
Erhalten (FIG. 10 Punkt 2H) eines zweiten Schlüssels für die zweite Netzwerkeinheit (340), basierend auf dem ersten Schlüssel; und
Übertragen (FIG. 10, Punkt 2I) einer Schlüsselantwort, die den zweiten Schlüssel für die zweite Netzwerkeinheit (340) enthält, an die zweite Netzwerkeinheit (340).

2. Verfahren nach Anspruch 1, wobei die erste Netzwerkeinheit (326) mit einer Authentifizierungs- und Schlüsselverwaltung für Anwendungen, AAnF, im Kommunikationssystem zusammenarbeitet.

3. Verfahren nach Anspruch 1, wobei:
das UE (310) sich in einem Roaming-Bereich befindet, und
die erste Netzwerkeinheit (326) und die SEAF (324a) sich in einem besuchten öffentlichen Land-Mobilfunknetzwerk, VPLMN, befinden.

4. Verfahren nach Anspruch 1, wobei die zweite Netzwerkeinheit (340) ein Edge-Konfigurationsserver, ECS, ist.

5. Verfahren nach Anspruch 1, wobei die Edge-Anwendung einen Edge-Computing-Dienst umfasst.

6. Erste Netzwerkeinheit (326) in einem Kommunikationssystem, das eine Edge-Anwendung unterstützt, wobei die erste Netzwerkeinheit (326) umfasst:
einen Sendeempfänger; und
mindestens einen mit dem Sendeempfänger gekoppelten Prozessor, wobei der mindestens eine Prozessor konfiguriert ist zum:
Empfangen (FIG. 10 Punkt 2B) eines ersten Schlüssels und von Schlüsselkennungsinformationen und einer permanenten Abonnementkennung, SUPI, eines Benutzergeräts, UE (310), von einer Sicherheitsankerfunktion, SEAF (324a), wobei der erste Schlüssel basierend auf einem Schlüssel für die SEAF (324a) nach primärer Authentifizierung zwischen dem UE (310) und einer Authentifizierungsserverfunktion, AUSF (324b), erzeugt wird,
Empfangen (FIG. 10 Punkt 2D), von einer zweiten Netzwerkeinheit (340), einer Schlüsselanforderung, die auf einer Anforderung von dem UE (310) basiert, wobei die Anforderung von dem UE (310) die Schlüsselkennungsinformationen umfasst,
Erhalten (FIG. 10 Punkt 2H) eines zweiten Schlüssels für die zweite Netzwerkeinheit (340), basierend auf dem ersten Schlüssel, und
Übertragen (FIG. 10, Punkt 2I) einer Schlüsselantwort, die den zweiten Schlüssel für die zweite Netzwerkeinheit (340) enthält, an die zweite Netzwerkeinheit (340).

7. Erste Netzwerkeinheit (326) nach Anspruch 6, wobei die erste Netzwerkeinheit (326) mit einer Authentifizierungs- und Schlüsselverwaltung für Anwendungen, AAnF, in dem Kommunikationssystem zusammenarbeitet.

8. Erste Netzwerkeinheit (326) nach Anspruch 6, wobei:
das UE (310) sich in einem Roaming-Bereich befindet, und
die erste Netzwerkeinheit (326) und die SEAF (324a) sich in einem besuchten öffentlichen Land-Mobilfunknetzwerk, VPLMN, befinden.

9. Erste Netzwerkeinheit (326) nach Anspruch 6, wobei die zweite Netzwerkeinheit (340) ein Edge-Konfigurationsserver, ECS, ist.

10. Erste Netzwerkeinheit (326) nach Anspruch 6, wobei die Edge-Anwendung einen Edge-Computing-Dienst umfasst.

## Revendications

1. Procédé mis en œuvre par une première entité de réseau (326) dans un système de communication prenant en charge une application en périphérie, le procédé comprenant :
recevoir (figure 10 point 2B) une première clé et des informations d'identifiant de clé et un identifiant permanent d'abonnement, SUPI, d'un équipement utilisateur, UE (310), à partir d'une fonction d'ancrage de sécurité, SEAF (324a), dans lequel la première clé est générée sur la base d'une clé pour la SEAF (324a) après une authentification primaire entre l'UE (310) et une fonction de serveur d'authentification, AUSF (324b) ;
recevoir (figure 10 point 2D), depuis une deuxième entité de réseau (340), une demande de clé qui est basée sur une demande de l'UE (310), la demande de l'UE (310) comprenant les informations d'identifiant de clé ;
obtenir (Fig. 10 point 2H) une deuxième clé pour la deuxième entité de réseau (340), en se basant sur la première clé ; et
transmettre (figure 10 point 2I), à la deuxième entité de réseau (340), une réponse de clé comprenant la deuxième clé pour la deuxième entité de réseau (340).

2. Procédé de la revendication 1, dans lequel la première entité de réseau (326) est colocalisée avec une gestion d'authentification et de clé pour des applications, AAnF, dans le système de communication.

3. Procédé de la revendication 1, dans lequel :
l'UE (310) se trouve dans une zone d'itinérance, et
la première entité de réseau (326) et la SEAF (324a) se trouvent dans un réseau mobile terrestre public visité, VPLMN.

4. Procédé de la revendication 1, dans lequel la deuxième entité de réseau (340) est un serveur de configuration en périphérie, ECS.

5. Procédé selon la revendication 1, dans lequel l'application en périphérie comprend un service informatique en périphérie.

6. Première entité de réseau (326) dans un système de communication prenant en charge une application en périphérie, la première entité de réseau (326) comprenant :
un émetteur-récepteur ; et
au moins un processeur couplé à l'émetteur-récepteur, l'au moins un processeur étant configuré pour :
recevoir (figure 10 point 2B) une première clé et des informations d'identifiant de clé et un identifiant permanent d'abonnement, SUPI, d'un équipement utilisateur, UE (310), à partir d'une fonction d'ancrage de sécurité, SEAF (324a), dans laquelle la première clé est générée sur la base d'une clé pour la SEAF (324a) après une authentification primaire entre l'UE (310) et une fonction de serveur d'authentification, AUSF (324b),
recevoir (figure 10 point 2D), depuis une deuxième entité de réseau (340), une demande de clé qui est basée sur une demande de l'UE (310), la demande de l'UE (310) comprenant les informations d'identifiant de clé,
obtenir (Fig. 10 point 2H) une deuxième clé pour la deuxième entité de réseau (340), en se basant sur la première clé, et
transmettre (figure 10 point 2I), à la deuxième entité de réseau (340), une réponse de clé comprenant la deuxième clé pour la deuxième entité de réseau (340).

7. Première entité de réseau (326) de la revendication 6, dans laquelle la première entité de réseau (326) est colocalisée avec une gestion d'authentification et de clé pour des applications, AAnF, dans le système de communication.

8. Première entité de réseau (326) de la revendication 6, dans laquelle :
l'UE (310) se trouve dans une zone d'itinérance, et
la première entité de réseau (326) et la SEAF (324a) se trouvent dans un réseau mobile terrestre public visité, VPLMN.

9. Première entité de réseau (326) de la revendication 6, dans laquelle la deuxième entité de réseau (340) est un serveur de configuration en périphérie, ECS.

10. Première entité de réseau (326) de la revendication 6, dans laquelle l'application en périphérie comprend un service informatique en périphérie.
